# EUROPEAN PATENT SPECIFICATION

(11) **EP 2 952 859 B1**
(45) Date of publication and mention of the grant of the patent: **28.08.2019**
(21) Application number: 14171535.9
(22) Date of filing: 06.06.2014
(51) Int. Cl.: G01F 3/00, G01F 1/075, G01F 1/06, G01F 15/07

(54) **Method and system for determining a volume of liquid flowing through a conduit**
Verfahren und System zur Bestimmung eines Volumens einer durch eine Leitung fließenden Flüssigkeit
Procédé et système pour déterminer un volume de liquide s'écoulant à travers un conduit

(43) Date of publication of application: 09.12.2015
(73) Proprietor: Brita GmbH, 65232 Taunusstein (DE)
(72) Inventor: Weidner, Peter, 92444 Rötz (DE); Bubinger, Michael, 65479 Raunheim (DE); Razin, Denis, 65199 Wiesbaden (DE); But, Alexej, 49846 Hoogstede (DE)
(74) Representative: van Lookeren Campagne, Constantijn August

(56) References cited:
- EP-A1- 1 983 310
- WO-A1-2006/058692
- US-A- 5 574 229
- US-A1- 2014 061 237

## Description

The invention relates to a method of determining a volume of liquid flowing through a conduit, including:
receiving a signal from a flow meter including a rotor drivable by liquid flowing through the flow meter, wherein the signal is representative of pulses obtainable by detecting passage of at least one signalling device of which movement is at least synchronised with that of the rotor;
determining a number (*N*) of the pulses within a time interval (*Δt*);
determining a measure (*f*) of a pulse frequency within the time interval (*Δt*); and
determining the volume as a function of a number (*N*) of pulses within the time interval (*Δt*) if the measure (*f*) is indicative of a pulse frequency above a certain value (*y*).

The invention also relates to a system for determining a volume of liquid flowing through a conduit, including:
an interface for receiving a signal from a flow meter including a rotor drivable by the liquid, wherein the signal is representative of pulses obtainable by detecting passage of at least one signalling device of which movement is at least synchronised with that of the rotor;
a signal processing unit for processing the signal, the signal processing unit being configured:
   to determine a number (*N*) of the pulses within a time interval (*Δt*);
   to determine a measure (*f*) of a pulse frequency within the time interval; and
   to determine the volume as a function of a number (*N*) of pulses within the time interval (*Δt*) if the measure (*f*) is indicative of a pulse frequency above a certain value (*y*).

The invention also relates to an apparatus including:
a flow meter,
the flow meter including
a rotor drivable by a liquid passing through the flow meter,
at least one signalling device of which movement is at least synchronised with that of the rotor and
at least one sensor for detecting passage of at least one of the at least one signalling devices and generating a signal representative of a pulse sequence, each detected passage resulting in at least one pulse; and
a system for processing the signal.

The invention also relates to a computer program.

US 5,574,229 discloses a method of making an electronic water meter to accurately measure the volume of water flowing through the meter especially at low flow rates to detect leakage, the meter comprising a body member through which the water flows, a magnetic rotor means mounted on the body and movable by the flow of water to produce magnetic signals into digital signals which are frequency pulse signals, and an electronic correction circuit means mounted on the meter body member to correct for non-proportionality between water flow and rotor means movement frequency. A "D" coefficient or Division coefficient is the number of pulses from the rotor that correspond to a determined unit of volume (litres, gallons, cubic feet etc.). A set of tests is performed on each meter rotor of a production run. Preferably, the test finds D coefficients at three flow rates. The electronic correction system includes a tachometer or frequency meter, which counts the number of times that the digitised signal changes over a period of time, using an oscillator for the determination of time. The calculation "D" (S) (number of rotor pulses/unit volume) is done by consulting the electronic correction system memory's data base and logic equations. A programmable divisor/divider is carried out with one or various preselectable binary counters. Resulting volume pulses can be sent to a remote accumulation unit or can be accumulated by the electronic correction system.

WO 2007/086049 discloses a self-calibrating fluid flow meter that generates pulses proportional to the flow therethrough both at high and low flow rates. A meter optimised for use as a water meter is of the type having a chamber in which a rotatable part is revolved by fluid flowing through the chamber. A rotor is mechanically linked by a shaft to an impeller, which impeller rotates as a result of fluid flow through the meter. It is possible to pick up four flow pulses for each rotation of the impeller. By conducting a test in order to construct a flow curve, flow through the meter at specific flow rates is measured, the time between pulses is recorded, and by utilisation of an external master flow meter recording the flow rate through said meter, the specific characteristics of a specific meter can be plotted. When testing, and thus constructing the flow curve for a meter, there is chosen a testing time interval with an arbitrary default of e.g. 4 seconds, which default is increased at the low flow rates to e.g. 30 seconds. The time interval from the start time of the first pulse to the end time of the last pulse is then measured, and in order to obtain a full pulse after said end time, one waits for the next pulse stop time. Pulses are counted in this time. The electronic flow meter records the time between pulses, i.e. the change of state, as well as the number of pulses in the time interval being tested. The higher the flow rate, the shorter the time between pulses (TBP) and the lower the flow rate, the longer the TBP. Once a curve TBP versus volume per pulse is in the calibration software, then the curve may be cut up using a predetermined algorithm. Typically, zero order curves will be used where changes are small in the meter curve characteristics, i.e. relating to high flows, and first order curves will be used where changes are great, typically at low flows. A text table of volume per pulse and TBP for zero order and, additionally, slope for first order is downloaded into a meter microprocessor.

A problem of the known method is that it must be carried out in the factory for each flow meter. This is because the variation in measurement error across a range of flow meters of the same type is relatively large. Thus, the known method requires that a calibration curve be determined experimentally for each individual flow meter by a manufacturer.

It is an object of the invention to provide a method, system, apparatus and computer program of the types defined above for measuring relatively small volume flows relatively accurately without increasing the resistance to flow of the flow meter by taking account of the conditions of use of the flow meter.

This object is achieved according to a first aspect by the method according to the invention, which is characterised by determining the volume as a pre-determined value (*z*) upon determining that the measure (*f*) is indicative of a pulse frequency equal to or lower than the certain value (*y*).

The pre-determined value is a value typically dependent on the conditions of use of the flow meter, typically on the characteristics of the appliance or appliances to which the conduit leads. The method includes receiving a signal from a flow meter including a rotor drivable by the fluid, wherein the signal is representative of a pulse sequence obtainable by detecting passage of at least one signalling device of which movement is at least synchronised with that of the rotor. Thus, the method is suitable for use with (axial) turbine flow meters, cylindrical piston meters, oval disk meters and, in particular, jet impeller flow meters. The latter are suitable for measuring flows of liquid to or through appliances for dispensing beverages, in particular intermittent flows of quantities of liquid corresponding to servings of particular sizes (a glass, a carafe, a cup, a tankard, etc.). They are relatively cheap and relatively compact. To avoid causing relatively large pressure drops in the flow meter, the nozzle from which the jet emerges should not be very narrow. This causes some inaccuracy at low rates of flow due to bypass flow - a problem also encountered with the other types of flow meter mentioned above. The method outlined herein addresses this. The appliance dispensing the beverage will be set to draw quantities of liquid of particular volumes, the smallest of which can be stored as the pre-determined value. In this way, calibration is dependent on the conditions of use of the flow meter, rather than the flow meter itself. It is not necessary to determine the characteristics of the flow meter at manufacturing. When larger quantities of liquid pass through the flow meter, the method is relatively accurate, in that it includes determining a number of the pulses within a period of time; determining a measure of a pulse frequency within the period of time; and determining the volume as a function of a number of pulses within the period of time. For this, a calibration factor is required, but it varies relatively little between flow meters of the same type, so that its value need not be determined separately for each individual flow meter.

The volume of liquid determined to flow through the conduit for the time interval under consideration may be added to a running total volume. Thus, the determination may be carried out for each of multiple pulse sequences of finite length, corresponding to discrete time intervals. The determination may be repeated and the determined volumes added to a running total until the end of a certain time period or a certain total value has been reached, for example, or until a first of these conditions has been met.

An embodiment includes identifying start and end points of the time interval (*Δt*) by detecting a start and cessation of liquid flow through the conduit.

This embodiment is for use when supplying liquid to an appliance arranged to draw liquid in bursts corresponding to discrete portions. The accuracy of this embodiment is relatively high, in that, when a large quantity is drawn, this is generally at a high rate. A small quantity is generally drawn at a relatively low rate, at which a volume determination based on pulse count is relatively inaccurate for many types of mechanical flow meter. Signal processing is carried out relatively efficiently in this embodiment, because it is based on variable-length time intervals. When the flow of liquid is interrupted, volume determinations are not carried out. When a larger quantity of liquid flows through the conduit, the volume of this quantity is determined in a single iteration of the method.

In a variant of this embodiment, the start and end points of the time interval (*Δt*) are identified by comparing a time between successive pulses with a certain threshold value.

The flow meter is adapted to provide pulses at a minimum frequency when liquid flows at a higher than a minimum expected volumetric rate of flow. The minimum frequency is chosen such that its inverse is appreciably smaller than the typical duration of an interruption in the flow of liquid. Thus, interruptions in flow can be distinguished from flow at small volumetric flow rates and thereby the start and end points of the time interval determined relatively accurately. The typical duration of an interruption in the flow of liquid may correspond to a typical duration of a pause between dispensing events of a beverage dispenser supplied through the conduit and/or to the minimum length of time from finishing the preparation of one beverage to commencing the preparation of next beverage in an appliance for preparing a beverage from liquid supplied through the conduit.

In a further variant, the volume is determined as the pre-determined value (*y*) if the measure (*f*) is indicative of a pulse frequency equal to or lower than the certain value (*y*), but only if the number (*N*) of pulses exceeds a certain minimum value.

This embodiment ensures that a volume corresponding to the certain value is not determined, and possibly added to a running total, when spurious pulses are detected. Only finite pulse sequences of a certain minimum length are taken into account. Thus, vibration or pressure changes not associated with a flow of liquid do not lead to the false determination that a quantity of the certain volume has passed through the conduit.

In an embodiment, the volume is determined as the pre-determined value (*y*) if the measure (*f*) is indicative of a pulse frequency equal to or lower than the certain value (*y*), but only if the volume (*V*) calculated as a function of the number of pulses within the time interval (*Δt*) has a smaller value than a certain maximum value, e.g. a certain maximum value corresponding to the pre-determined value (*z*) of the volume.

This addresses the problem that an interruption of the flow may have been missed, i.e. the end point of the time interval determined incorrectly. The determined volume is not half of what it should be, but will have an inaccuracy below 50 % for a typical flow meter. Indeed, the number of pulses may, even in the light of the low rate of flow, be high enough to keep the error in the value calculated on the basis of the pulse count relatively low.

In an embodiment, the volume of liquid flowing through the conduit to an appliance including at least a device for dispensing a beverage, e.g. a hot beverage, is determined.

This is a suitable setting for applying the method, because beverages are typically dispensed in well-defined serving sizes. In particular, the smallest serving size is relatively well-defined. Given a typical acceptable duration of a dispensing event, the typical rates of flow are also relatively well-defined and can be used to discern between the delivery of a small serving and the delivery of a relatively large serving. Thus, the certain value will reflect reality relatively accurately.

In an embodiment, the volume of liquid flowing from a mains water supply is determined.

This is a suitable setting for applying the method, because the liquid will be supplied at a relatively well-defined and constant pressure. The flow meter can be configured to provide a particular maximum pressure drop. This defines the range of flow rate values expected to occur for given volumes of quantities of liquid flowing through the conduit. There is thus a relatively good correlation between flow rate and volume.

In an embodiment, the flow meter comprises a jet impeller flow meter.

According to another aspect, the system according to the invention is characterised in that the signal processing unit is configured to determine the volume as a pre-determined value (*z*) upon determining that the measure (*f*) is indicative of a pulse frequency equal to or lower than the certain value (*y*).

The system may be configured to carry out a method according to the invention.

According to another aspect, the apparatus according to the invention includes a flow meter, the flow meter including a rotor drivable by a liquid passing through the flow meter, at least one signalling device of which movement is at least synchronised with that of the rotor and at least one sensor for detecting passage of at least one of the at least one signalling devices and generating a signal representative of a pulse sequence, each detected passage resulting in at least one pulse; and a system according to the invention for processing the signal.

The signalling device or devices may be comprised in the rotor.

In an embodiment, the apparatus further includes an appliance for dispensing a beverage, e.g. a hot beverage.

The appliance may be suitable for preparing a hot beverage by extraction, e.g. espresso coffee.
An embodiment of the apparatus further includes a liquid treatment device including a replaceable liquid treatment cartridge.

The replaceable liquid treatment cartridge may contain at least a liquid treatment medium for the treatment of liquid by sorption, which in the present context includes the treatment of liquid by ion exchange. The liquid treatment medium may include a weakly acidic cation exchange resin. This resin may be at least partly in the hydrogen form. Such a liquid treatment device typically includes a device for blending liquid treated by contacting with the cation exchange resin with liquid untreated or treated to a lesser extent by contacting with the cation exchange resin. In such a device it is useful to determine the relative volumes of the liquid passed through a conduit to the liquid treatment cartridge and that bypassing some or all of the cation exchange resin in the liquid treatment cartridge. The liquid treatment medium in the liquid treatment cartridge may include activated carbon as an alternative to or in addition to the cation exchange resin.

An embodiment of the apparatus, wherein the system is configured to carry out the volume determination repeatedly and to add each determined volume to a running total, further includes a device for providing an output signal when the running total has reached a maximum total volume.

The liquid treatment medium in the liquid treatment cartridge will be exhausted after a certain volume of water has been treated. In this embodiment, the need to replace the cartridge can be signalled relatively accurately. In a variant, the output signal is provided when the earliest of two events occurs, namely the running total's reaching the maximum total volume and the elapse of a certain maximum period of time since a point in time at which a signal associated with replacement of the liquid treatment cartridge is received.
In an embodiment of the apparatus the flow meter comprises a jet impeller flow meter.

The flow meter may be a multiple-jet or single-jet impeller flow meter.

According to another aspect of the invention, there is provided a computer program including a set of instructions capable, when incorporated in a machine-readable medium, of causing a system having information processing capability to execute a method according to the invention.

The invention will be explained in further detail with reference to the accompanying drawings, in which:
Fig. 1 is a schematic diagram of an apparatus comprising a water treatment device and an appliance for preparing and dispensing a beverage;
Fig. 2 is a schematic cross-section of a main part of a flow meter comprised in the water treatment device;
Fig. 3 is a schematic view of a lid of the flow meter comprising a housing accommodating a sensor and signal processing unit shown in phantom lines;
Fig. 4 is a diagram showing the relative deviation from a nominal value of a volumetric flow rate determined with a flow meter of the type shown in Figs. 2 and 3 when the flow meter includes a nozzle having a relatively large diameter;
Fig. 5 is a diagram is a diagram showing the relative deviation from a nominal value of a volumetric flow rate determined with a flow meter of the type shown in Figs. 2 and 3 when the flow meter includes a nozzle having a relatively small diameter;
Fig. 6 is a diagram showing a variance across three flow meter of the type shown in Figs. 2 and 3 with the same dimensions for different volumetric flow rates; and
Fig. 7 is a flow chart illustrating steps in a method of determining a volume of liquid flowing through a conduit to which the flow meter is connected.

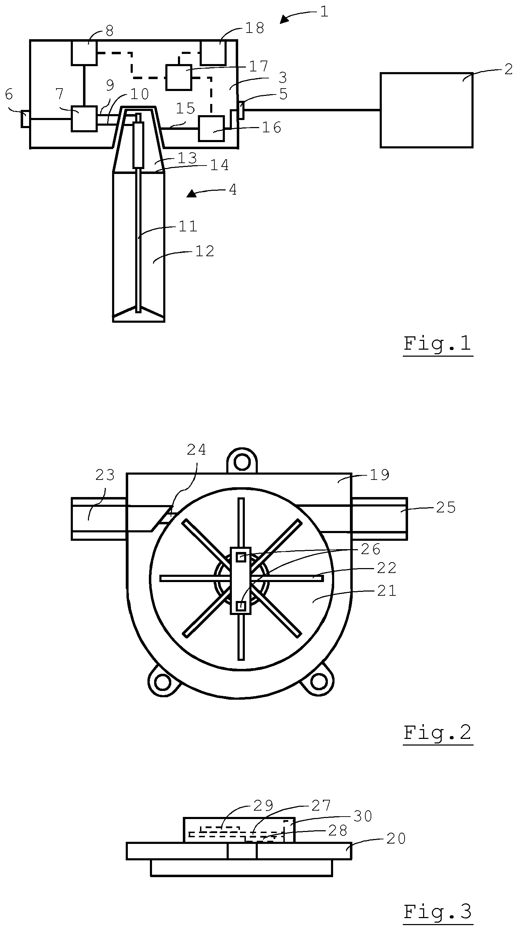

An apparatus (Fig. 1) for use in a restaurant, cafe or coffee bar includes a water treatment device 1 and an appliance 2 for preparing and dispensing hot beverages. The appliance is in particular suitable for preparing and dispensing servings of coffee and espresso coffee. A minimum serving size corresponds to the volume of a typical espresso cup, lying in the range of from 20 to 40 ml, e.g. about 30 to 35 ml. The appliance 2 will generally be an automatic espresso machine with pre-set water volumes. The appliance 2 includes one or more porta-filters (not shown) for holding the ground coffee.

Espresso makers with porta-filters draw water at a volumetric flow rate of about 0.1 l·min⁻¹. When a single espresso is dispensed, the volumetric flow rate is typically in the range of 0.04 - 0.06 l·min⁻¹. If the appliance 2 is provided with the capability of dispensing two servings of espresso coffee simultaneously, it will typically draw water at a rate within a range of 0.08 - 0.12 l·min⁻¹. The appliance 2 may also draw water at a much higher rate and in larger quantities, for example when dispensing hot water for brewing tea or providing steam through a wand for frothing milk. The volumetric flow rate will thus lie within an overall range of 0.04 - 2 l·min⁻¹.

The water supplied by the water treatment device 1 to the appliance 2 is at least partially decarbonised by the water treatment device 1 in order to protect the appliance against scale formation. Decarbonisation involves the removal of components contributing to carbonate hardness (also referred to as temporary hardness) from the water. These components are principally magnesium and calcium carbonate.

The water treatment device 1 includes a filter head 3 for releasable connection to a replaceable liquid treatment cartridge 4 such that a substantially liquid-tight connection between at least one outlet of the filter head 3 and associated inlets of the liquid treatment cartridge 4 and between at least one inlet of the filter head 3 and associated outlets of the liquid treatment cartridge 4 are established. The filter head 3 is provided with at least one outlet connector 5 for connection to a conduit leading to the appliance 2. It also has at least one inlet connector 6 for connection to the mains water supply. Water is thus typically supplied at a pressure within the range of 4 - 8 bar.

In the illustrated embodiment, the filter head 3 includes a variable-ratio flow divider 7 and an actuator 8 for adjusting the variable-ratio flow divider 7. The variable-ratio flow divider 7 may be of the type disclosed in WO 2009/101188 A1. The variable-ratio flow divider splits an incoming flow of untreated water into two flows, which are led through first and second conduits 9,10 to the liquid treatment cartridge 4. The ratio between the volumetric flow rates of the two flows can be adjusted by operating the actuator 8. In one embodiment, the actuator 8 is operable by a user, e.g. by inserting a tool such as an Allen key into an exposed socket at the end of a spindle (not shown) of the actuator 8. In another embodiment, the actuator 8 includes a motor (not shown) controlled by a control unit for automatically adjusting the variable-ratio flow divider 7 to set the volumetric flow rate ratio. The liquid treatment cartridge 4 receives the two flows of water through separate inlets. A first flow of water is conveyed through a fall tube 11 so as subsequently to pass through a first liquid treatment part 12 comprising a bed of liquid treatment medium. A liquid treatment medium of the first liquid treatment part 12 includes a medium for the treatment of liquid by ion exchange, in particular a weakly acidic cation exchange resin. At least some of the weakly acidic cation exchange resin is in the hydrogen form and thus arranged to decarbonise water, i.e. remove components contributing to carbonate hardness. In the process, the pH of the water is lowered. The liquid treatment medium of the first liquid treatment part 12 may further include activated carbon and/or cation exchange resin loaded with another counterion, in particular an alkali metal.

From the first liquid treatment part 12, the water passes into a second liquid treatment part 13. The first and second liquid treatment parts 12,13 are separated by a liquid-permeable device 14 for retaining the granular media of the first liquid treatment part 12 in the first liquid treatment part 12. The second liquid treatment part 13 includes a liquid treatment medium, which may be of a granular nature. It will generally include activated carbon. It may alternatively or additionally include an ion exchange resin.

A second flow of water, which is led to the liquid treatment cartridge 4 through the second conduit 10, is led through the liquid treatment cartridge 4 so as to bypass the first liquid treatment part 12. It does not bypass the second liquid treatment part 13, however. Instead, it is mixed with the first flow of water in the second liquid treatment part 13. A blend of water that has passed through both the first and second liquid treatment parts 12,13 and water that has passed through only the second of the first and second liquid treatment parts 12,13 is thus provided by the liquid treatment cartridge 4 to the filter head 3. The water originally making up the first and second flows is treated differently or at least to a different extent, in particular decarbonised to a different extent. Therefore, the acidity and carbonate hardness of the water provided by the liquid treatment cartridge 4 to the filter head 3, and thence to the appliance 2, can be adjusted by adjusting the variable-ratio flow divider 7.

The mix of water received by the filter head 3 from the liquid treatment cartridge 4 passes through a third conduit 15 to the outlet connector 5. A flow meter 16 is arranged in the third conduit 15. It is arranged to send a signal to a data processing device 17 for determining a volume of liquid flowing through at least one of the first, second and third conduits 9,10,15 on the basis of the signal. The data processing device 17 may be an ASIC or a programmed general-purpose microprocessor. Where the data processing device 17 is arranged to determine the volume of liquid flowing through the first and/or the second conduit 9,10 it is provided with a signal representative of the settings of the variable-ratio flow divider 7. It thus able to determine what proportion of the flow of water passing through the flow meter 16 has passed through which one of the first and second conduits 9,10.

The data processing device 17 is connected to an output interface for providing an output signal based on the determined volume. In the illustrated embodiment, the output interface includes at least one device 18 forming part of a user interface. The device 18 forming part of the user interface includes a device for providing a perceptible output, in particular a visible and/or audible output. In another embodiment, the device 18 forms part of an interface for providing a signal to a further device, e.g. the appliance 2 or a remote monitoring device (not shown).

In one embodiment, the data processing device 17 is arranged to determine the volume of water that has passed through the first conduit since a point of time corresponding to the commencement of use of the liquid treatment cartridge 4. This volume is compared to a maximum treatable volume to determine a state of exhaustion of at least some of the liquid treatment medium included in the first liquid treatment part 12, in particular the cation exchange material initially in the hydrogen form. When the maximum treatable volume has been reached, an output signal is provided through the device 18 forming part of the user interface. A further signal may be provided in advance when the volume has reached a certain percentage of the maximum treatable volume. In an embodiment, the data processing device 17 further tracks the amount of time that has elapsed since the point of time corresponding to commencement of use of the liquid treatment cartridge 4 if a certain maximum period of use is reached before the treated volume has reached the maximum treatable volume, then the output signal indicating the need to replace the liquid cartridge 4 or the output signal indicating the imminent need to replace the liquid treatment cartridge 4 is provided at this earlier point in time.

The filter head 3 may be arranged to determine at least one of the carbonate hardness, total hardness and electrical conductivity of the water prior to treatment in the first liquid treatment part 12. It may use this determination to select an appropriate value for the maximum treatable volume and/or to control the actuator 8 to adjust the variable-ratio flow divider 7 to the appropriate settings.

The illustrated flow meter 16 is of the jet impeller type. It includes a housing including a main housing part 19 (Fig. 2) and a lid 20 (Fig. 3). The lid 20 can be mounted to the main housing part 19. The main housing part 19 (Fig. 2) defines a chamber 21, which is closed off by the lid 20 when the latter is mounted to the main housing part 19. A rotor includes an impeller 22, arranged to revolve within the chamber 21.

The main housing part 19 has formed therein an inlet 23 leading to a nozzle 24 of a defined diameter for forming a jet directed at the impeller 22, in use. The water leaves the chamber through an outlet 25 formed in the main housing part 19. The jet impacts on the impeller 22 off-axis, so that the impeller 22, and thus the rotor in which it is comprised, is drivable by the flow of liquid through the flow meter 16. A pair of signalling devices 26 is mounted to the rotor, in this example to the impeller 22, in the chamber 21. Each is arranged radially at a distance to an axis of revolution of the rotor. In the illustrated embodiment, the signalling devices 26 are mounted at 180° separation on a common locus of revolution about the axis of revolution of the rotor. In an alternative embodiment, a different separation is selected, allowing the correct direction of revolution to be confirmed.

Housed in a compartment comprised in the lid 20 (Fig. 3) is a printed circuit board 27 on which are mounted a sensor 28 and a signal processing device 29, as well as a connector 30 for connecting a lead (not shown) for communicating a signal to the data processing device 17. The signal is representative of pulses obtainable by detecting passage of the signalling devices 26 past the sensor 28 as the rotor revolves within the chamber 21.

In an embodiment, the signalling devices 26 are permanent magnets, with the sensor 28 being a Hall sensor or Reed switch, for example. In other embodiments, the signalling device is no more than a component arranged periodically to interrupt a light beam directed onto an optical sensor. In yet another embodiment, the signalling device comprises a section of a rotary encoder arranged to rotate with the rotor and to reflect a light beam onto an optical sensor.

It will be appreciated that the pressure differential across the flow meter 16 depends primarily on the diameter of the nozzle 24. The smaller the diameter of the nozzle, the larger the pressure drop will be. Given that the water treatment device 1 is arranged to provide water received from the mains water supply to the appliance without the aid of a pump, the pressure drop should generally be kept below a fraction of one bar, e.g. below 0.5 or even 0.2 or 0.1 bar.

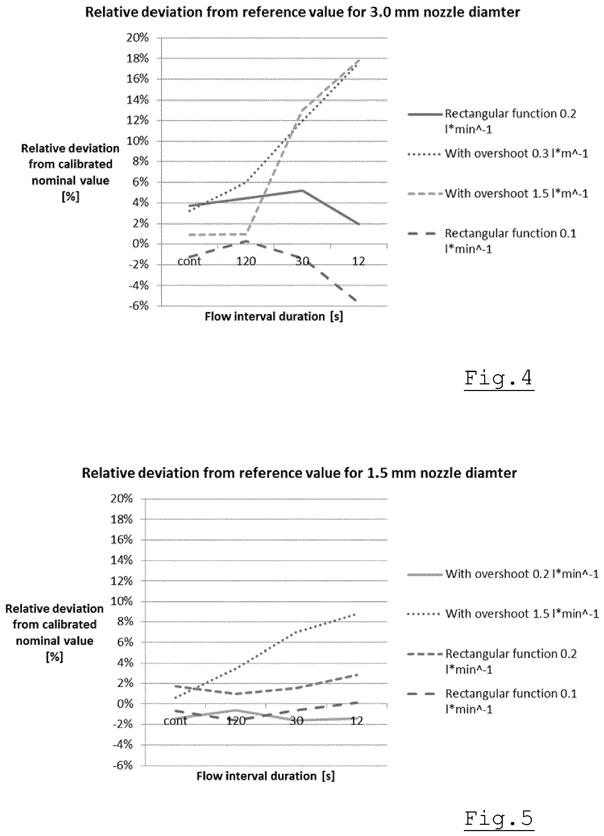

On the other hand, larger diameters lead to deviations of the frequency of revolution of the rotor from the value to be expected on the basis of the volumetric rate of flow of the liquid through the flow meter 16, in particular if the volumetric flow rate is not constant. This is shown in Figs. 4 and 5 for a single flow meter of the type illustrated in Figs. 2 and 3 when provided with a nozzle having a diameter of 3 and 1.5 mm respectively. The flow meter was mounted upstream of a valve in a conduit which was operated such that the volumetric flow rate developed in the form of either an essentially ideal rectangular function or as one showing overshoot. In the case of the essentially ideal rectangular function, the volumetric flow rate rose from zero to a particular nominal flow rate according to a step function and then decreased back to zero after an interval of a particular duration or did not decrease at all (interval duration indicated as "cont" on the x-axis). Alternatively, as mentioned, the flow rate developed to show some overshoot, akin to the response of a second order system to a step function. The nominal flow rate was confirmed using scales supporting a vessel in which the water was collected. It can be seen that the volumetric flow rate as determined on the basis of the frequency of revolution of the rotor deviated more in case of the nozzle with a diameter of 3 mm than in case of the nozzle with a diameter of 1.5 mm. Furthermore, these deviations were especially large when the flow rate did not develop in accordance with an ideal rectangular function, but oscillated about the nominal value during the flow of liquid. This is typically the situation encountered in a set-up as shown in Fig. 1. Moreover, the shorter the interval of time during which liquid flows, the larger the relative deviation becomes. In the set-up illustrated in Fig. 1, this means that the volume of liquid that has been treated in the water treatment device 1 is determined relatively inaccurately when many small quantities of liquid (e.g. corresponding to many servings of espresso coffee) are treated, unless a nozzle 24 with a small diameter is used.

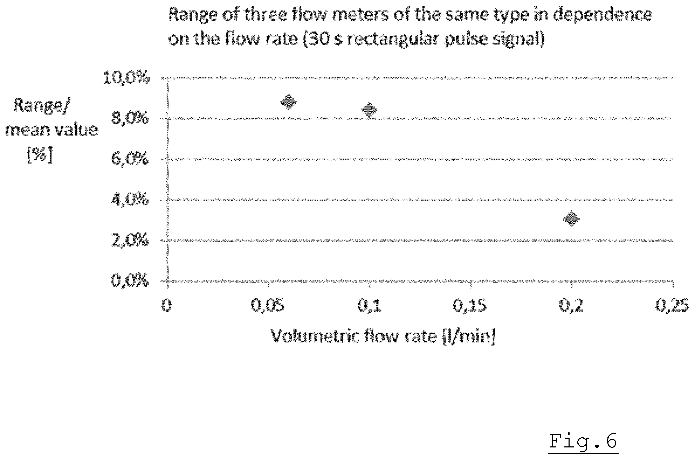

Another property of the type of flow meter 16 shown in Figs. 2 and 3 is that the deviation varies strongly between different meters of the same type and with nozzles of the same diameter. This is illustrated in Fig. 6 for three flow meters. At small flow rates, the variance relative to the mean flow rate determined by the three flow meters is relatively large.

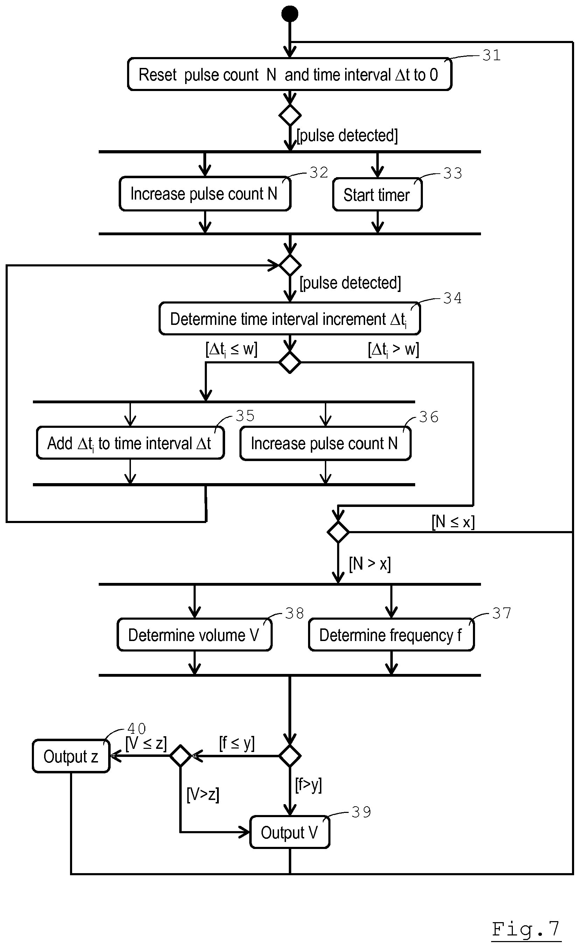

Rather than use a nozzle 24 with a small diameter and thus causing a relatively large pressure drop across the flow meter 16 the data processing device 17 makes use of a method as illustrated in Fig. 7 to determine the total volume of water treated from a point of time corresponding to initial placement of the replaceable liquid treatment cartridge 4 in the water treatment device 1.

The flow of liquid to the appliance 2, and thus through the flow meter 16, is intermittent. The data processing device 17 therefore receives pulse sequences of finite duration. It determines the volume of liquid to which each pulse sequence corresponds and then provides the value of this volume as output. The value is, for example, used as the input to a routine for keeping track of a running total representing the total volume of water treated from a point of time corresponding to initial placement of the replaceable liquid treatment cartridge 4 in the water treatment device 1.

The data processing device 17 is configured to maintain a pulse count N in memory (not shown separately), and to keep track of the length of a time interval *Δt* corresponding to a length of a pulse sequence of finite length. In a first step 31, these variables are set to zero. When a pulse is detected, the pulse count *N* is increased (step 32) by one and a timer for tracking the length of the pulse sequence is triggered (step 33).

When a next pulse is detected, an increment *Δtᵢ* in the time interval *Δt* from the preceding pulse to the current pulse is determined (step 34). If the time interval increment *Δtᵢ* is equal to or smaller than a certain threshold value *w*, then the increment *Δtᵢ* is added to the time interval *Δt* (step 35) and the pulse count *N* is increased (step 36) by one.

If, however, the time between successive pulses exceeds the certain threshold value *w*, then it is assumed that these pulses are not part of the same pulse sequence of finite duration. It is at least assumed that the earlier of the two successive pulses marks the end of one pulse sequence of finite length. The later of the two pulses is thus not added to the pulse count, and neither is the time interval increment *Δtᵢ* added to the time interval.

Rather, the method proceeds to a determination of whether a true pulse sequence has been finished. To this end, it is determined whether the number *N* of pulses exceeds a certain minimum value *x*. The minimum value may be one or higher, but will generally be below ten. The point of this determination is to distinguish spurious pulses arising from interference, vibrations and the like from short sequences corresponding to the flow of a small quantity of water to the appliance 2.

If the pulse count *N* is larger than the certain minimum value *x*, then the method proceeds to a determination (step 38) of the volume *V* that has given rise to the pulse sequence, as calculated on the basis of the pulse count *N*. This step 38 entails division of the pulse count *N* by a pre-set conversion factor representative of the number of pulses per unit volume. Alternatively, multiplication by the inverse of such a factor is carried out. In case the volume of interest is that which has passed through the first or second conduit 9,10, then the result is further multiplied by a factor representative of the proportion of water (as a fraction of the water passing through the water treatment device 1) that has flowed through the first conduit 9 or second conduit 10, respectively.

Concurrently, a pulse frequency *f* is determined by dividing the pulse count *N* by the time interval *Δt* (step 37). If the frequency *f* determined in this step 37 is higher than a certain value *y*, then the volume *V* as determined on the basis of the pulse count *N* is provided as output (step 39) for use in other processes such as tracking the remaining useful lifetime of the liquid treatment cartridge 4.

If, on the other hand, the frequency *f* is smaller than or equal to the certain value *y*, then the volume of the liquid quantity of which the flow has given rise to the pulse sequence is determined as a pre-determined value *z*. However, this value is only provided as output (step 40) if the vol-volume *V* calculated as a function of the pulse count *N* in the preceding step 38 is smaller than a certain maximum value, in this example corresponding to the pre-determined value *z*. In this way, if the data processing device 17 has failed to detect the boundary between two successive finite pulse sequences (corresponding e.g. to two servings of espresso coffee being dispensed in succession), the output is not off by at least 50 %. Instead, the calculated volume V determined in the preceding step 38 on the basis of the pulse count *N* is provided as output for use in other data processing steps (not shown). This output will also have a relatively large error due to the fact that the diameter of the nozzle 24 is too large, but the error will generally be smaller than 50 %.

Having provided an output for the latest detected pulse sequence of finite length, the method returns to an initial state via the very first step 31, so that the data processing device 17 is ready to determine the volume of liquid giving rise to the next detected pulse sequence. This determination again provides a pre-set value as output for frequencies corresponding to volumetric flow rates below a certain value, e.g. 0.1 l·min⁻¹. A value based on the pulse count is provided for frequencies in a range corresponding to volumetric flow rate in the range of 0.1 l·min⁻¹ - 2 l·min⁻¹.

The invention is not limited to the embodiment described above, which may be varied within the scope of the accompanying claims. For example, rather than keep track of a total volume of water treated from a point of time corresponding to initial placement of the replaceable liquid treatment cartridge 4 in the water treatment device 1, the data processing device 17 may convert the volume determined to correspond to a particular pulse sequence of finite length into some other usage measure. This may be added to a running total of this usage measure and compared to a maximum total usage afforded by the liquid treatment cartridge 4, for example. Depending on the type of sensor 28, the impeller 22 or an integral part thereof, may correspond to the at least one signalling device 26 so that the latter are not distinguishable from the impeller 22. Furthermore, the pre-determined value z may be programmable. For example, the pre-determined value z may be programmable by a user via the device 18 or a further device forming part of the user interface.

### List of reference numerals

- 1: - water treatment device
- 2: - appliance
- 3: - filter head
- 4: - cartridge
- 5: - outlet connector
- 6: - inlet connector
- 7: - flow divider
- 8: - actuator
- 9: - first conduit
- 10: - second conduit
- 11: - fall tube
- 12: - first liquid treatment part
- 13: - second liquid treatment part
- 14: - separating device
- 15: - third conduit
- 16: - flow meter
- 17: - data processing device
- 18: - user interface device
- 19: - main housing part
- 20: - housing lid
- 21: - chamber
- 22: - impeller
- 23: - flow meter inlet
- 24: - nozzle
- 25: - flow meter outlet
- 26: - signalling device pair
- 27: - printed circuit board
- 28: - sensor
- 29: - signal processing device
- 30: - circuit board connector
- 31: - step (reset pulse count and time interval)
- 32: - step (increase pulse count)
- 33: - step (start timer)
- 34: - step (determine time interval increment)
- 35: - step (add *Δtᵢ* to time interval *Δt*)
- 36: - step (increase pulse count)
- 37: - step (determine frequency *f*)
- 38: - step (determine volume *V*)
- 39: - step (output *V*)
- 40: - step (output *z*)

## Claims

1. Method of determining a volume of liquid flowing through a conduit (9,10,15), including:
receiving a signal from a flow meter (16) including a rotor (22) drivable by liquid flowing through the flow meter (16), wherein the signal is representative of pulses obtainable by detecting passage of at least one signalling device (26) of which movement is at least synchronised with that of the rotor (22);
determining a number (*N*) of the pulses within a time interval (*Δt*);
determining a measure (*f*) of a pulse frequency within the time interval (*Δt*); and
determining the volume as a function of a number (*N*) of pulses within the time interval (*Δt*) if the measure (*f*) is indicative of a pulse frequency above a certain value (*y*), **characterised by**
determining the volume as a pre-determined value (*z*) upon determining that the measure (*f*) is indicative of a pulse frequency equal to or lower than the certain value (*y*).

2. Method according to claim 1,
including identifying start and end points of the time interval (*Δt*) by detecting a start and cessation of liquid flow through the conduit.

3. Method according to claim 2,
wherein the start and end points of the time interval (*Δt*) are identified by comparing a time between successive pulses with a certain threshold value.

4. Method according to any one of claims 2 and 3,
wherein the volume is determined as the pre-determined value (z) if the measure (*f*) is indicative of a pulse frequency equal to or lower than the certain value (*y*), but only if the number (*N*) of pulses exceeds a certain minimum value.

5. Method according to any one of claims 2-4,
wherein the volume is determined as the pre-determined value (z) if the measure (*f*) is indicative of a pulse frequency equal to or lower than the certain value (*y*), but only if the volume (*V*) calculated as a function of the number of pulses within the time interval (*Δt*) has a smaller value than a certain maximum value, e.g. a certain maximum value corresponding to the pre-determined value (*z*) of the volume.

6. Method according to any one of the preceding claims,
wherein the volume of liquid flowing through the conduit (9,10,15) to an appliance (2) including at least a device for dispensing a beverage, e.g. a hot beverage, is determined.

7. Method according to any one of the preceding claims,
wherein the volume of liquid flowing from a mains water supply is determined.

8. Method according to any one of the preceding claims,
wherein the flow meter (16) comprises a jet impeller flow meter.

9. System for determining a volume of liquid flowing through a conduit (9,10,15), including:
an interface for receiving a signal from a flow meter (16) including a rotor (22) drivable by the liquid, wherein the signal is representative of pulses obtainable by detecting passage of at least one signalling device (26) of which movement is at least synchronised with that of the rotor (22);
a signal processing unit (17) for processing the signal, the signal processing unit (17) being configured:
to determine a number (*N*) of the pulses within a time interval (*Δt*);
to determine a measure (*f*) of a pulse frequency within the time interval; and
to determine the volume as a function of a number (*N*) of pulses within the time interval (*Δt*) if the measure (*f*) is indicative of a pulse frequency above a certain value (*y*), **characterised in that**
the signal processing unit (17) is configured to determine the volume as a pre-determined value (*z*) upon determining that the measure (*f*) is indicative of a pulse frequency equal to or lower than the certain value (*y*).

10. System according to claim 9,
configured to carry out a method according to any one of claims 1-8.

11. Apparatus including:
a flow meter (16),
the flow meter (16) including
a rotor (22) drivable by a liquid passing through the flow meter (16),
at least one signalling device (26) of which movement is at least synchronised with that of the rotor (22) and
at least one sensor for detecting passage of at least one of the at least one signalling devices (26) and generating a signal representative of a pulse sequence, each detected passage resulting in at least one pulse; and
a system (3,17) according to any one of claims 9 and 10 for processing the signal.

12. Apparatus according to claim 11,
further including an appliance (2) for dispensing a beverage, e.g. a hot beverage.

13. Apparatus according to claim 11 or 12,
further including a liquid treatment device (1) including a replaceable liquid treatment cartridge (4).

14. Apparatus according to any one of claims 11-13,
wherein the system is configured to carry out the volume determination repeatedly and to add each determined volume to a running total, further including a device (18) for providing an output signal when the running total has reached a maximum total volume.

15. Computer program including a set of instructions capable, when incorporated in a machine-readable medium, of causing a system (3) having information processing capability to execute a method according to any one of claims 1-8.

## Patentansprüche

1. Verfahren zum Bestimmen eines Volumens einer Flüssigkeit, die durch eine Leitung (9, 10, 15) fließt, umfassend folgende Schritte:
Empfangen eines Signals von einem Durchflussmesser (16), der einen Rotor (22) umfasst, der durch eine Flüssigkeit, die durch den Durchflussmesser (16) fließt, angetrieben werden kann, wobei das Signal Impulse darstellt, die erzielbar sind, indem ein Durchgang mindestens einer Signalvorrichtung (26), deren Bewegung mindestens mit der des Rotors (22) synchronisiert ist, detektiert wird;
Bestimmen einer Anzahl (N) der Impulse innerhalb eines Zeitintervalls (Δt);
Bestimmen einer Messung (f) einer Impulsfrequenz innerhalb des Zeitintervalls (Δt); und
Bestimmen des Volumens als Funktion einer Anzahl (N) von Impulsen innerhalb des Zeitintervalls (Δt), falls die Messung (f) eine Impulsfrequenz über einem gewissen Wert (y) angibt,
**dadurch gekennzeichnet, dass** das Volumen als ein vorbestimmter Wert (z) bestimmt wird, wenn bestimmt wird, dass die Messung (f) eine Impulsfrequenz angibt, die gleich oder kleiner als der gewisse Wert (y) ist.

2. Verfahren nach Anspruch 1, umfassend das Identifizieren von Anfangs- und Endpunkten des Zeitintervalls (Δt), indem ein Anfang und ein Ende eines Fließens der Flüssigkeit durch die Leitung detektiert wird.

3. Verfahren nach Anspruch 2, wobei die Anfangs- und Endpunkte des Zeitintervalls (Δt) identifiziert werden, indem eine Zeit zwischen aufeinanderfolgenden Impulsen mit einem gewissen Schwellenwert verglichen wird.

4. Verfahren nach einem der Ansprüche 2 und 3, wobei das Volumen als der vorbestimmte Wert (z) bestimmt wird, falls die Messung (f) eine Impulsfrequenz angibt, die gleich oder kleiner als der gewisse Wert (y) ist, jedoch nur, falls die Anzahl (N) von Impulsen einen gewissen Mindestwert überschreitet.

5. Verfahren nach einem der Ansprüche 2 bis 4, wobei das Volumen als der vorbestimmte Wert (z) bestimmt wird, falls die Messung (f) eine Impulsfrequenz angibt, die gleich oder kleiner als der gewisse Wert (y) ist, jedoch nur, falls das Volumen (V), das als Funktion der Anzahl von Impulsen innerhalb des Zeitintervalls (Δt) berechnet wird, einen Wert aufweist, der kleiner als ein gewisser Höchstwert, z.B. ein gewisser Höchstwert, der dem vorbestimmten Wert (z) des Volumens entspricht, ist.

6. Verfahren nach einem der vorhergehenden Ansprüche, wobei das Volumen von Flüssigkeit, die durch die Leitung (9, 10, 15) zu einem Gerät (2) fließt, das mindestens eine Vorrichtung zum Ausschenken eines Getränks, z.B. eines Heißgetränks, umfasst, bestimmt wird.

7. Verfahren nach einem der vorhergehenden Ansprüche, wobei das Volumen von Flüssigkeit, die aus einem Trinkwassernetz fließt, bestimmt wird.

8. Verfahren nach einem der vorhergebenden Ansprüche, wobei der Durchflussmesser (16) einen Flügelrad-Durchflussmesser umfasst.

9. System zum Bestimmen eines Volumens einer Flüssigkeit, die durch eine Leitung (9, 10, 15) fließt, umfassend:
eine Schnittstelle zum Empfangen eines Signals von einem Durchflussmesser (16), der einen Rotor (22) umfasst, der durch eine Flüssigkeit, die durch den Durchflussmesser (16) fließt, angetrieben werden kann, wobei das Signal Impulse darstellt, die erzielt werden können, indem der Durchgang mindestens einer Signalvorrichtung (26), deren Bewegung mindestens mit der des Rotors (22) synchronisiert ist, detektiert wird;
eine Signalverarbeitungseinheit (17) zum Verarbeiten des Signals, wobei die Signalverarbeitungseinheit (17) konfiguriert ist zum:
Bestimmen einer Anzahl (N) der Impulse innerhalb eines Zeitintervalls (Δt);
Bestimmen einer Messung (f) einer Impulsfrequenz innerhalb des Zeitintervalls; und
Bestimmen des Volumens als Funktion einer Anzahl (N) von Impulsen innerhalb des Zeitintervalls (Δt), falls die Messung (f) eine Impulsfrequenz über einem gewissen Wert (y) angibt,
**dadurch gekennzeichnet, dass** die Signalverarbeitungseinheit (17) konfiguriert ist, um das Volumen als einen vorbestimmten Wert (z) zu bestimmen, wenn bestimmt wird, dass die Messung (f) eine Impulsfrequenz angibt, die gleich oder kleiner als ein gewisser Wert (y) ist.

10. System nach Anspruch 9, konfiguriert, um ein Verfahren nach einem der Ansprüche 1 bis 8 durchzuführen.

11. Gerät, umfassend:
einen Durchflussmesser (16), wobei der Durchflussmesser (16) umfasst
einen Rotor (22), der durch eine Flüssigkeit, die durch den Durchflussmesser (16) geht, angetrieben werden kann,
mindestens eine Signalvorrichtung (26), deren Bewegung mindestens mit der der Rotors (22) synchronisiert ist, und
mindestens einen Sensor zum Detektieren eines Durchgangs der mindestens einen Signalvorrichtung (26) und zum Generieren eines Signals, das eine Impulsfolge darstellt, wobei jeder detektierte Durchgang mindestens einen Impuls ergibt; und
ein System (3, 17) nach einem der Ansprüche 9 und 10 zum Verarbeiten des Signals.

12. Gerät nach Anspruch 11, ferner umfassend ein Gerät (2) zum Ausschenken eines Getränks, z.B. eines Heißgetränks.

13. Gerät nach Anspruch 11 oder 12, ferner umfassend eine Vorrichtung (1) zum Aufbereiten einer Flüssigkeit, die eine austauschbare Kartusche (4) zum Aufbereiten einer Flüssigkeit umfasst.

14. Gerät nach einem der Ansprüche 11 bis 13, wobei das System konfiguriert ist, um die Volumenbestimmung wiederholt durchzuführen, und um jedes bestimmte Volumen zu einer laufenden Summe hinzufügen, ferner umfassend eine Vorrichtung (18) zum Bereitstellen eines Ausgangssignals, wenn die laufende Summe ein maximales Gesamtvolumen erreicht hat.

15. Computerprogramm, umfassend einen Satz von Anweisungen, die, wenn sie in einen maschinenlesbaren Datenträger integriert sind, bewirken, dass ein System (3), das zur Datenverarbeitung fähig ist, ein Verfahren nach einem der Ansprüche 1 bis 8 ausführt.

## Revendications

1. Procédé pour déterminer un volume de liquide s'écoulant à travers un conduit (9, 10, 15), comprenant :
recevoir un signal provenant d'un débitmètre (16) comprenant un rotor (22) apte à être entraîné par du liquide s'écoulant à travers le débitmètre (16), le signal représentant des impulsions pouvant être obtenues par détection de passage d'au moins un dispositif de signalisation (26) dont un mouvement est au moins synchronisé avec celui du rotor (22) ;
déterminer un nombre (*N*) des impulsions dans un intervalle de temps (Δt) ;
déterminer une mesure (*f*) d'une fréquence d'impulsions dans l'intervalle de temps (Δt) ; et
déterminer le volume en fonction d'un nombre (*N*) d'impulsions dans l'intervalle de temps (Δt) si la mesure (*f*) indique une fréquence d'impulsions supérieure à une certaine valeur (*y*), **caractérisé par**
déterminer le volume comme valeur prédéterminée (*z*) lorsqu'il est déterminé que la mesure (*f*) indique une fréquence d'impulsions inférieure ou égale à la certaine valeur (*y*).

2. Procédé selon la revendication 1,
comprenant identifier des moments de début et de fin de l'intervalle de temps (Δt) par détection du début et de l'arrêt de l'écoulement de liquide à travers le conduit.

3. Procédé selon la revendication 2,
dans lequel les moments de début et de fin de l'intervalle de temps (Δt) sont identifiés par comparaison d'un temps entre des impulsions successives avec une certaine valeur de seuil.

4. Procédé selon l'une quelconque des revendications 2 et 3,
dans lequel le volume est déterminé comme valeur prédéterminée (*z*) si la mesure (*f*) indique une fréquence d'impulsions inférieure ou égale à la certaine valeur (*y*), mais seulement si le nombre (*N*) d'impulsions dépasse une certaine valeur minimale.

5. Procédé selon l'une quelconque des revendications 2 à 4,
dans lequel le volume est déterminé comme valeur prédéterminée (*z*) si la mesure (*f*) indique une fréquence d'impulsions inférieure ou égale à la certaine valeur (*y*), mais seulement si le volume (*V*) calculé en fonction du nombre d'impulsions dans l'intervalle de temps (Δt) a une valeur inférieure à une certaine valeur maximale, par exemple une certaine valeur maximale correspondant à la valeur prédéterminée (*z*) du volume.

6. Procédé selon l'une quelconque des revendications précédentes,
dans lequel le volume de liquide s'écoulant à travers le conduit (9, 10, 15) vers un appareil (2) comprenant au moins un dispositif pour distribuer une boisson, par exemple une boisson chaude, est déterminé.

7. Procédé selon l'une quelconque des revendications précédentes,
dans lequel le volume de liquide s'écoulant depuis une alimentation en eau du réseau est déterminé.

8. Procédé selon l'une quelconque des revendications précédentes,
dans lequel le débitmètre (16) comprend un débitmètre à aubes à jet.

9. Système pour déterminer un volume de liquide s'écoulant à travers un conduit (9, 10, 15), comprenant :
une interface pour recevoir un signal provenant d'un débitmètre (16) comprenant un rotor (22) apte à être entraîné par le liquide, le signal représentant des impulsions pouvant être obtenues par détection de passage d'au moins un dispositif de signalisation (26) dont un mouvement est au moins synchronisé avec celui du rotor (22) ;
une unité de traitement de signal (17) pour traiter le signal, l'unité de traitement de signal (17) étant configurée :
pour déterminer un nombre (*N*) des impulsions dans un intervalle de temps (Δt) ;
pour déterminer une mesure (*f*) d'une fréquence d'impulsions dans l'intervalle de temps ; et
pour déterminer le volume en fonction d'un nombre (*N*) d'impulsions dans l'intervalle de temps (Δt) si la mesure (*f*) indique une fréquence d'impulsions supérieure à une certaine valeur (*y*), **caractérisé par le fait que**
l'unité de traitement de signal (17) est configurée pour déterminer le volume comme valeur prédéterminée (*z*) lorsqu'il est déterminé que la mesure (*f*) indique une fréquence d'impulsions inférieure ou égale à la certaine valeur (*y*).

10. Système selon la revendication 9,
configuré pour réaliser un procédé selon l'une quelconque des revendications 1 à 8.

11. Appareil comprenant :
un débitmètre (16),
le débitmètre (16) comprenant
un rotor (22) apte à être entraîné par un liquide passant à travers le débitmètre (16),
au moins un dispositif de signalisation (26) dont un mouvement est au moins synchronisé avec celui du rotor (22), et
au moins un capteur pour détecter le passage d'au moins un parmi l'au moins un dispositif de signalisation (26) et générer un signal représentant une séquence d'impulsions, chaque passage détecté résultant en au moins une impulsion ; et
un système (3, 17) selon l'une quelconque des revendications 9 et 10 pour traiter le signal.

12. Appareil selon la revendication 11,
comprenant en outre un appareil (2) pour distribuer une boisson, par exemple une boisson chaude.

13. Appareil selon la revendication 11 ou 12,
comprenant en outre un dispositif de traitement de liquide (1) comprenant une cartouche de traitement de liquide remplaçable (4).

14. Appareil selon l'une quelconque des revendications 11 à 13,
dans lequel le système est configuré pour réaliser la détermination de volume de manière répétée et ajouter chaque volume déterminé à un total cumulé, comprenant en outre un dispositif (18) pour fournir un signal de sortie lorsque le total cumulé a atteint un volume total maximal.

15. Programme d'ordinateur comprenant un ensemble d'instructions capables, lorsqu'incorporées dans un support lisible par machine, d'amener un système (3) ayant une capacité de traitement d'informations à exécuter un procédé selon l'une quelconque des revendications 1 à 8.
